**Europäisches Patentamt**

**European Patent Office**

**Office européen des brevets**

(11) Numéro de publication: **0 119 144**
**A1**

## (12) DEMANDE DE BREVET EUROPEEN

(21) Numéro de dépôt: **84420030.3**

(22) Date de dépôt: **24.02.84**

(51) Int. Cl.³: **B 62 D 7/14**
**B 60 K 17/34, B 60 G 17/02**

(30) Priorité: **04.03.83 FR 8303970**

(43) Date de publication de la demande:
**19.09.84 Bulletin 84/38**

(84) Etats contractants désignés:
**BE CH DE GB IT LI NL SE**

(71) Demandeur: **Collard, André**
**Rue de Tours - Bouzy**
**F-51150 Tours sur Marne(FR)**

(71) Demandeur: **Collard, Michel**
**Lotissement "Les Tartelettes" Bouzy**
**F-51150 Tours sur Marne(FR)**

(72) Inventeur: **Collard, André**
**Rue de Tours - Bouzy**
**F-51150 Tours sur Marne(FR)**

(72) Inventeur: **Collard, Michel**
**Lotissement "Les Tartelettes" Bouzy**
**F-51150 Tours sur Marne(FR)**

(74) Mandataire: **Maisonnier, Jean**
**28 rue Servient**
**F-69003 Lyon(FR)**

(54) Véhicule tout terrain à applications multiples.

(57) Le véhicule (1) possède quatre roues motrices (9) et (10).
Derrière la cabine (3), mais devant les roues arrière (10), un espace libre latéral (28) permet de monter des accessoires agricoles. Les fixations en trois points (30) et (35) sont amobiles et réglables en hauteur.

Application : véhicule à possibilités multiples, notamment pour l'agriculture.

FIG 13

EP 0 119 144 A1

La présente invention est relative à un véhicu-tout terrain d'un type nouveau , susceptible d'être utilisé pour les applications les plus diverses . En particulier , un tel véhicule peut circuler sur un terrain accidenté pour déplacer des personnes , mais il peut également être utilisé à la façon d'une machine agricole , dans les champs ou dans les forêts .

Un véhicule tout terrain selon l'invention comprend un châssis porteur d'un moteur thermique et monté sur quatre roues motrices , et il est caractérisé en ce que chacune des quatre roues est à la fois motrice et directrice , la transmission entre le moteur thermique et chacune des quatre roues étant entièrement hydraulique , ce qui permet de monter chaque roue sur un bras de suspension indépendant , d'augmenter considérablement la garde au sol : , par la suppression de tout essieu , et de conserver l'assiette du châssis même en terrain accidenté .

Le véhicule comporte un poste de pilotage où l'utilisateur actionne un volant de direction .

Suivant une autre caractéristique de l'invention , le volant de direction est relié à chacune des quatre roues directrices , par une transmission de direction entièrement hydraulique dont la commutation permet de rendre directrices , ou bien deux roues seulement , ou bien l'ensemble des quatre roues , la possibilité étant par ailleurs fournie de faire avancer le véhicule " en crabe " , les axes des quatre roues étant parallèles entre eux , mais non plus perpendiculaires à l'axe géométrique longitudinal du châssis.

Suivant une autre caractéristique de l'invention , chacun des quatre bras de suspension est équipé d' un vérin de suspension prenant appui sur le châssis , les quatre vérins de suspension étant commandés à partir du poste de pilotage grâce à une calculatrice centrale susceptible de maintenir automatiquement horizontale l'assiette du châssis , quelle que soit la position de chacune des roues.

Suivant une autre caractéristique de l'invention , le châssis porte , à l'avant , la cabine de pilotage , à l'arrière , le réservoir d'huile de la centrale hydraulique , alors que dans sa partie centrale , le châssis

2

reste dégagé sur ses deux côtés , ce qui laisse la partie centrale du véhicule libre pour y monter latéralement et entre les roues , des accessoires divers.

Suivant une autre caractéristique de l'invention , le châssis comporte à l'arrière , comme à l'avant, des fixations en trois points , qui sont démontables .

Suivant une autre caractéristique de l'invention , le véhicule comporte , à l'avant , comme à l'arrière, une prise de force réglable en hauteur , ce qui permet à l' arbre de transmission correspondant , de travailler toujours avec le meilleur angle , pour l'articulation de Cardan qu'il comporte et qui entraîne un appareil monté à l'avant ou à l' arrière du véhicule .

Le dessin annexé , donné à titre d'exemple non limitatif , permettra de mieux comprendre les caractéristisques de l'invention.

Figure 1 est une vue latérale d'un véhicule tout terrain selon l'invention.

Figure 2 en est une vue en plan.

Figure 3 est un schéma illustrant la disposition en plan des divers organes.

Figure 4 est une vue de face de ce véhicule en position normale.

Figure 5 est une vue analogue en position susurélevée.

Figures 6 et 7 sont des vues illustrant le fonctionnement de la suspension pour maintenir constamment horizontale l'assiette du châssis , quel que soit le profil en pente du terrain.

Figure 8 est un schéma en plan illustrant la cinématique et la commande hydraulique de la direction agissant sur les quatre roues orientables.

Figure 9 est une vue latérale montrant les quatre roues braquées pour prendre une virage à rayon de braquage très court.

Figure 10 est la vue en plan correspondante

Figure 11 est une vue latérale montrant les quatre roues braquées , pour faire avancer le véhicule " en crabe ".

3

Figure 12 est la vue en plan correspondante.

Figures 13 et 14 sont des vues latérales montrant deux éuqipements possibles du véhicule pour des applications agricoles.

Le véhicule 1 représenté sur les dessins comporte un châssis longitudinal 2 , dont la partie avant porte une cabine de pilotage 3'. Dans cette cabine se trouve le siège 4 du conducteur , situé face à un volant de direction 5 . Par ailleurs , sous la partie centrale de la cabine 3 , se trouve le compartiment 6 , d'un moteur thermique . Ce moteur entraîne une pompe hydraulique 8 , que des canalisations non représentées relient à un réservoir d'huile 7 , situé à l'arrière entre les longerons du châssis 2 .

Le véhicule est porté par quatre roues ,à savoir deux roues avant 9 , et deux roues arrière 10 , dont chacune est située à l'extrémité libre d'un bras de suspension oscillant 11 . Chacune des quatre roues 9 et 10 comporte un moyeu 12 , auquel est incorporé un moteur hydraulique qu'alimente la pompe 8 , à partir d'un poste de distribution et de commande non représenté , équipant le tableau de bord dans la cabine 3 . Le moyeu 12 à moteur hydraulique incorporé de chacune des quatre roues 9 ou 10 est articulé par rapport au bras de suspension 11 qui le porte , si bien que chacune des quatre roues 9 et 10 est à la fois motrice et directrice.

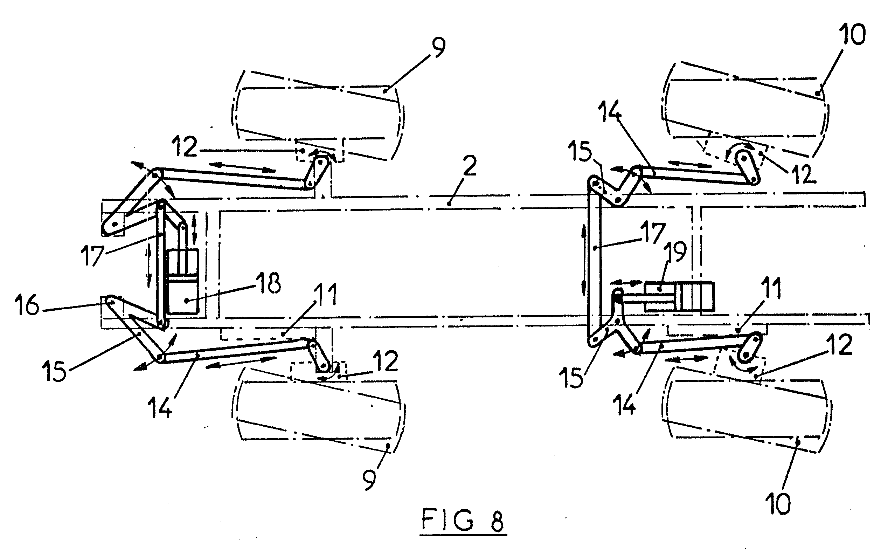

On a illustré sur la figure 8 , un mode de réalisation possible des tringleríes de direction reliant entre elles , d'une part les deux roues avant 9 , d'autre part les deux roues arrière 10 . Cette commande de direction comprend , pour chaque roue , une biellette de liaison 14 qu'un balancier 15 articulé sur un point fixe 16 de l'avant du châssis relie à l'extrémité correspondante d'une barre de direction transversale 17 . Cette barre de direction 17 est commandée par un vérin de direction à double effet 18 ,disposé transversalement à l'avant du châssis 2 .

Pour la direction des roues arrière 10 , on utilise de la même façon une tringlerie 14 , 15 , actionnée par une barre de direction transversale 17 , mais cette dernière est commandée par un vérin à double effet 19 disposé transversalement sur l'un des longerons du châssis 2.

4

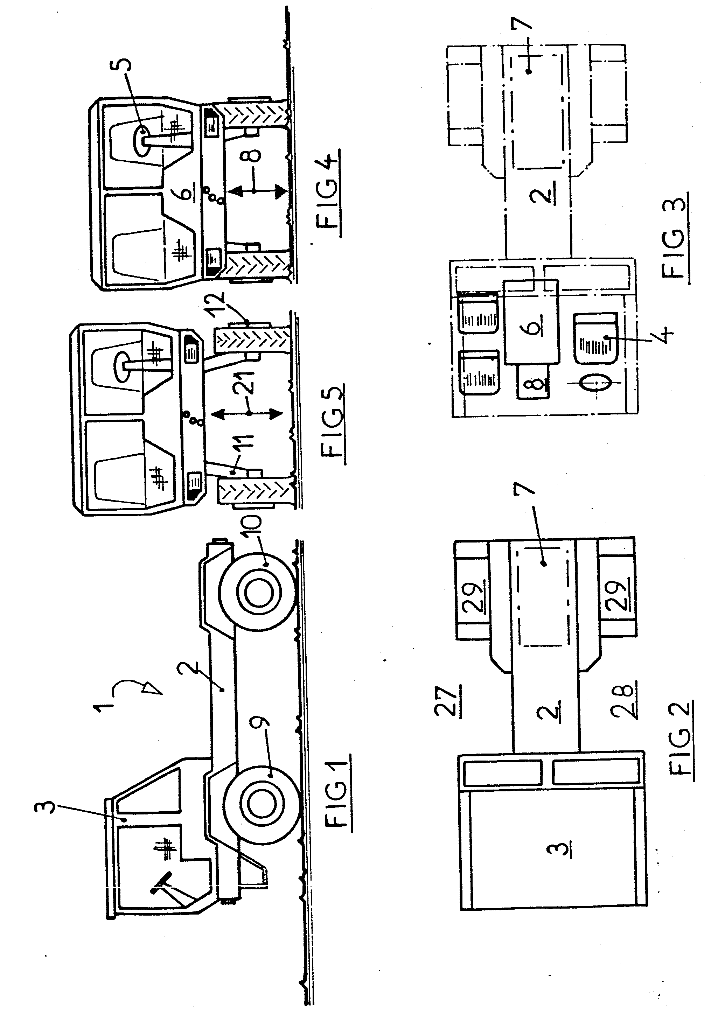

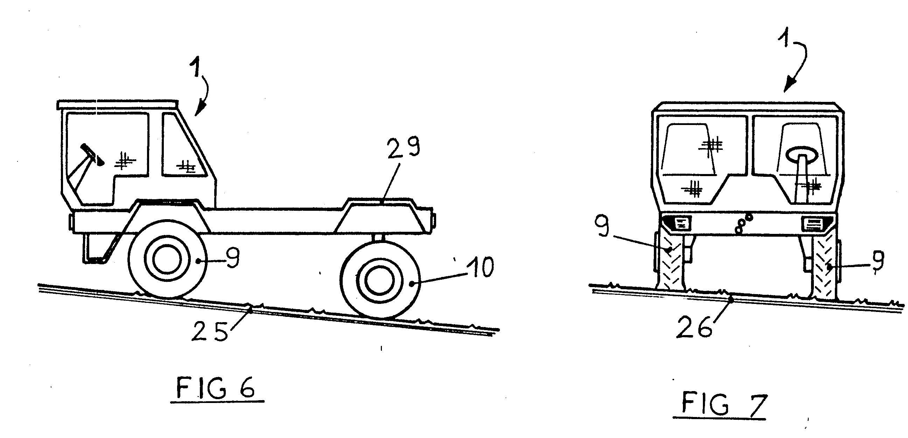

Grâce à cette direction , on voit qu'aucun essieu transversal ne relie les deux roues avant 9 , non plus que les deux roues arrière 10 . Il en résulte ( figures 4 et 5) , que la garde au sol du véhicule ( 20 , en position normale , figure 4 ; 21 , en position surélevée , figure 5) est particulièrement importante , ce qui convient bien à une circulation dans des terrains très accidentés.

Chaque bras de suspension 11 des quatre roues indépendantes 9 et 10 est soumis à l'action d'un vérin de suspension non représenté.Ce type de vérin est bien connu par exemple sur les véhicules à suspension hydropneumatique. On sait comment , à partir du tableau de bord , le conducteur peut augmenter ou non , la longueur moyenne de ces vérins de suspension , pour faire passer le véhicule de sa position normale ( figure 4) à la position surélevée (figure 5) ,pour rouler sur un terrain particulièrement accidenté.

La colonne de  direction actionnée par le volant 5 est reliée aux deux vérins de direction 18 et 19 uniquement par des canalisations hydrauliques , à l'exclusion de toute autre liaison mécanique . Le volant 5 commande donc des distributeurs hydrauliques non représentés , de type connu , qui peuvent actionner l'un ou l'autre des deux vérins 18 et 19 , ou bien les deux à la fois , avec ou sans synchronisme . Cette disposition présente en particulier l'avantage de permettre les deux manoeuvres suivantes :

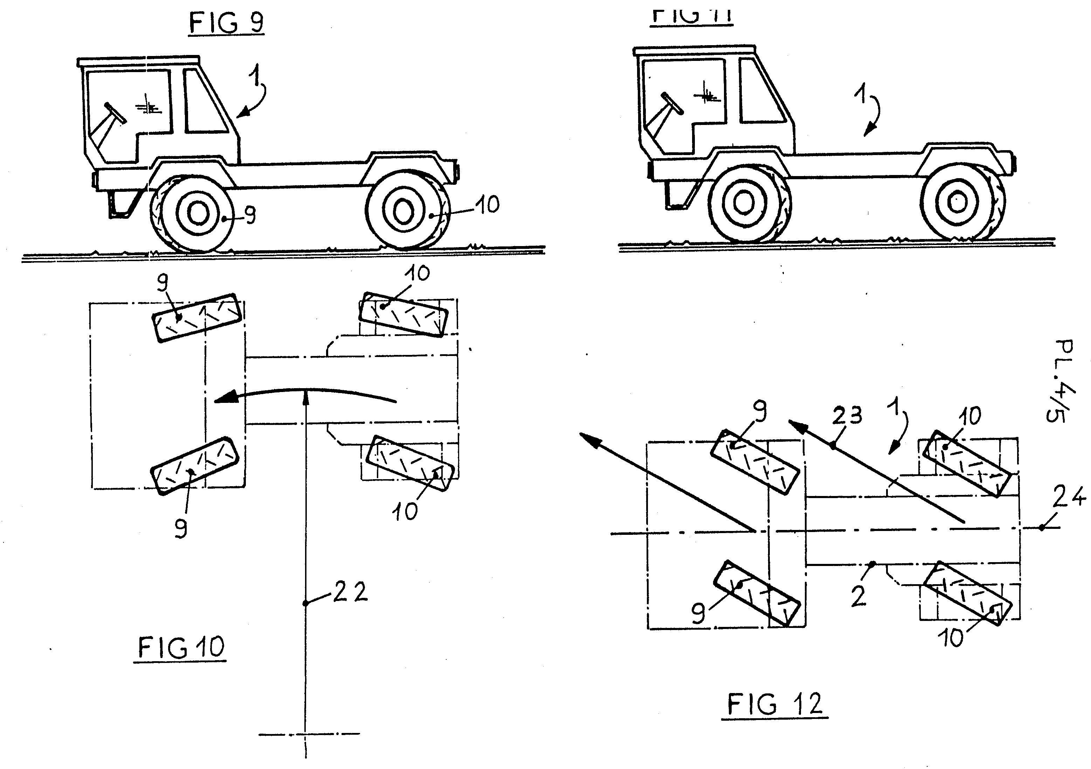

- dans l'exemple des figures 9 et 10 , les roues avant 9 sont braquées toutes deux vers la gauche , tandis que les roues arrière 10 sont braquées toutes deux vers la droite . Il en résulte pour le véhicule 1 , une position de braquage suivant un virage à gauche dont le rayon 22 est extraordinairement court .

- dans l'exemple des figures 11 et 12 , les roues  avant 9 sont braquées vers la droite , de la même façon que les roues arrière 10 . Il en résulte que le véhicule 1 se déplace " en crabe " , c'est-à-dire qu'il peut avancer en ligne droite , suivant une direction 23 ne coïncidant pas avec la direction de l'axe longitudinal moyen 24 du châssis 2 .

Les vérins de suspension des bras oscillants indépendants 11 sont commandés à partir d'une centrale hydrau-

5

lique de type connu . Cependant , dans le cas de l'invention , cette centrale comporte une calculatrice susceptible à chaque instant , de commander séparément chacun des quatre vérins de suspension , afin de maintenir si on le désire , l'assiette du châssis 2 constamment à l'horizontale. Ainsi, sur un terrain 25 en pente longitudinale ascendante , les vérins de suspension des roues arrière 10 sont plus allongés que les vérins des roues avant 9 . Au contraire , dans le cas de la figure 7 , c'est-à-dire lorsque le véhicule 1 circule à flanc de coteau , les vérins de suspension des deux roues droite  sont plus courts à leur position moyenne, que les vérins de suspension des deux roues gauche , dans l' hypothèse où la pente du terrain 26 correspond à l'orientation de la figure 7  .

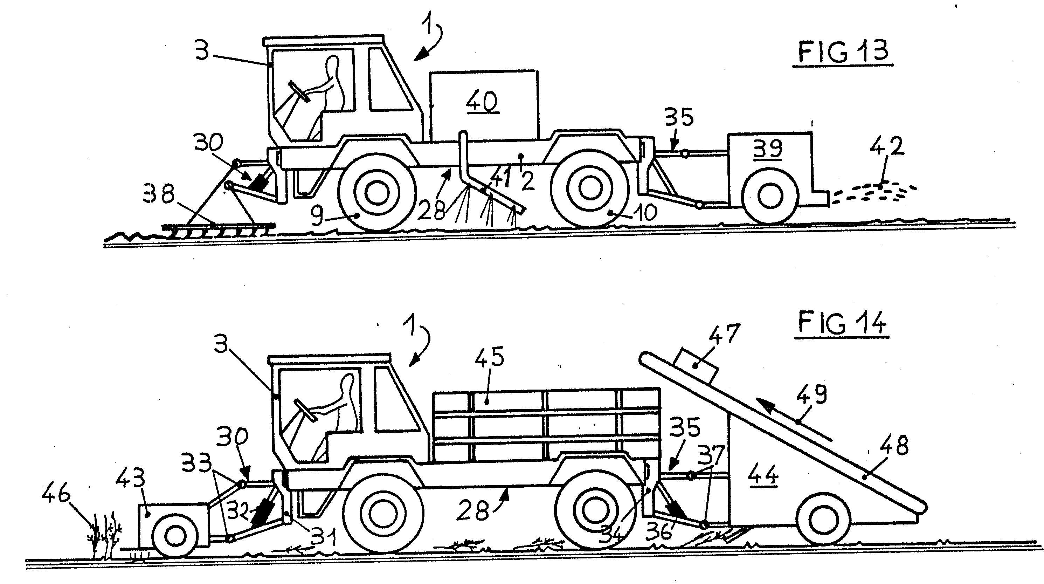

On remarque notamment sur les figures 2 ,3, 8 , 10 et 12 , que la structure du véhicule selon l'invention présente la caractéristique de définir de part et d'autre de la partie centrale du châssis 2 , des espaces libres 27 et 28 qui restent disponibles pour y monter divers accessoires , machines  agricoles ou autres  . Chaque espace libre 27 et 28 , se trouve disposé derrière la cabine 3 , entre celle-ci et le passage de roues arrière 29 correspondant. Autrement dit , dans sa vue en plan , le véhicule 1 selon l' invention offre un profil resserré dans sa partie centrale (figure 2) . Cette disposition est importante , notamment pour des applications agricoles , du genre illustré sur les figures 13 et 14.

Le véhicule selon l'invention comporte par ailleurs à l'avant , la possibilité de monter une platine amovible 31 , sur laquelle est prévue une fixation en trois points du genre de celle qu'on  utilise pour les machines agricoles  . Toutefois , la fixation 30 du véhicule selon l'invention est articulée et possède un vérin de réglage 32 qui permet de régler à la valeur voulue la hauteur de chacun des trois points de fixation 33 , par rapport au sol.

De même , on peut fixer à l'arrière la platine amovible 34 , d'une fixation en trois points 35 munie d'un vérin de réglage 36 . Grâce à ce vérin 36 , on peut régler la hauteur au-dessus du sol des trois points de

6

fixation 37 du dispositif.

On voit que la structure générale du véhicule selon l'invention , et notamment la présence des espaces latéraux libres 27 et 28 , offrent de nombreuses possibilités , par exemple dans les deux cas illustrés sur les figures 13 et 14.

Sur la figure 13 , on a adapté sur la fixation avant 30 , une herse 38 , tandis que sur la fixation arrière 35 , on a raccordé un semoir 39 . Par ailleurs , sur la partie centrale du châssis 2 , on a placé un réservoir et un distributeur à engrais 40 , dont les rampes de distribution 41 sont disposées dans les espaces latéraux libres 27 et 28 . Grâce à cette disposition , par un seul passage dans les champs , le véhicule 1 ainsi équipé , permet de herser le terrain , d'y déverser de l'engrais ,et d'y répartir la semence 42 .

Une autre possibilité est illustrée sur la figure 14 , où l'on a adapté à l'avant une faucheuse 43 , tandis qu'à l'arrière est fixée une presse ramasseuse 44 , une caisse de stockage 45 étant portée par le châssis 2 . Dans ce cas , lorsque le véhicule 1 ainsi équipé avance par exemple dans une prairie à faucher , la faucheuse 4 coupe l' herbe 46 , qui tombe au sol , où elle est ensuite récupérée par la ramasseuse 44 . Cette dernière presse la paille ou le foin pour former des balles 47 , que le convoyeur 48 remonte suivant la direction de la flèche 49 , jusqu'à les deverser dans la caisse de stockage 45 . Ainsi , le véhicule 1 ainsi équipé procède en un seul passage , à toutes les opérations de récolte et d'évacuation .

dans les exemples des figures 13 et 14 , on a prévu trois postes de travail sur le véhicule 1 . Dans certains cas , on pourrait même prévoir quatre postes . Par exemple , on pourrait monter à l'avant une ensileuse à luzerne qui collecterait la luzerne pour la déverser par dessus la cabine 3 , dans un silo prévu sur le châssis 2 , derrière la cabine 3 . Il va de soi que divers autres accessoires pourraient être montés sur le véhicule . Par exemple , on pourrait assujettir la direction à un rayon laser qui provoquerait automatiquement le braquage des roues 9 et 10 au

7

fur et à mesure que le véhicule 1 avance suivant un traje:
prédéterminé . Cela permet en particulier de suivre automatiquement un parcours rigoureusement rectiligne.

Par ailleurs , la structure qui vient d'être
décrite permet de prévoir , dans la cabine 3 , un poste de
conduite susceptible de pivoter sur lui-même , pour effectuer la conduite du véhicule en sens inverse.

De toute façon , la forme et la disposition
des éléments du châssis 2 confèrent à l'ensemble du véhicule 1 un controur caractérristique en " taille de guêpe"
(figures 2 , 3 , 10 et 12)

8
REVENDICATIONS

1 -Véhicule tout terrain comprenant un châssis porteur d'un moteur thermique et monté sur quatre roues motrices , caractérisé en ce que chacune des quatre roues (9) (10) est à la fois motrice et directrice , la transmission entre le moteur thermique (6) et chacune des quatre roues (9), (10) étant entièrement hydraulique , ce qui permet de monter chaque roue (9) , (10) sur un bras de suspension oscillant indépendant (11) , d'augmenter considérablement la garde au sol (20) , (21) par la suppression de tout ·essieu , et de conserver l'assiette du châssis (2) , même en terrain accidenté.

2 - Véhicule tout terrain suivant la revendication 1 , comportant une cabine de pilotage (3) , d'où l'utilisateur actionne un volant de direction (5) , caractérisé en ce que le volant de direction (5) est relié à chacune des quatre roues directrices (9) , (10) , par une transmission de direction entièrement hydraulique , dont la commutation permet de rendre directrices , ou bien deux roues (9) ou deux roues (10) seulement , ou bien l'ensemble des quatre roues (9) , (10) , la possibilité étant par ailleurs fournie de faire avancer le véhicule " en crabe " (figures 11 et 12) , les axes des quatre roues étant parallèles entre eux , mais non plus perpendiculaires à l'axe géométrique longitudinal (24) du châssis (2).

3 - Véhicule tout terrain suivant l'une quelconque des revendications précédentes , caractérisé en ce que chacun des quatre bras de suspension (11) est équipé d'un vérin de suspension prenant appui sur le châssis (2) , les quatre vérins de suspension étant commandés à partir du poste de pilotage (3 ) , grâce à une calculatrice centrale susceptible de maintenir automatiquement constante l'assiette du châssis (2) , quelle que soit la position de chacune des roues (9), (10) .

4 - Véhicule tout terrain suivant l'une quelconque des revendications précédentes , caractérisé en ce que le châssis (2) porte , à l'avant , la cabine de pilotage (3) , à l'arrière , le réservoir d'huile (7) de la centrale hydraulique , alors que , dans sa partie centrale , le châssis res-

9

te dégagé sur ses deux côtés , ce qui laisse la partie centrale du véhicule libre en (27) et (28) , pour y monter latéralement , entre les roues ou sous le châssis (taille de guêpe) , des accessoires divers.

5 - Véhicule tout terrain suivant l'une quelconque des revendications précédentes , caractérisé en ce que le châssis (2) comporte , à l'arrière comme à l'avant , des fixations en trois points (30) et (35) , qui soont démontables et prévues pour assurer l'ancrage d'appareils auxiliaires , notamment pour les travaux agricoles.

6 - Véhicule tout terrain suivant l'une quelconque des revendications précédentes , caractérisé en ce qu' il comporte , à l'avant comme à l'arrière , une prise de force réglable en hauteur , ce qui permet à l'arbre de transmission correspondant , de travailler toujours avec le meilleur angle ,pour l'articulation de Cardan qu'il comporte et qui entraîne un appareil monté à l'avant ou à l'arrière du véhicule.

7 - Véhicule tout terrain suivant l'une quelconque des revendications précédentes , caractérisé en ce qu'au moyeu de chacune des quatre roues (9) et (10) ,est incorporé un moteur hydraulique (12).

8 - Véhicule tout terrain suivant l'une quelconque des revendications précédentes , caractérisé en ce que le châssis (2) comporte en sa partie centrale , un évidement latéral important , qui permet le montage d'adaptations particulières.

9 - Véhicule tout terrain suivant l'une quelconque des revendications précédentes , caractérisé en ce que la disposition du poste de conduite dans la cabine (3) permet à celui-ci de pivoter sur lui-même , pour effectuer une conduite en sens inverse.

0119144

PL. 1/5

FIG 1 FIG 2 FIG 3 FIG 4 FIG 5

1

29

9

10

25

FIG 6

1

9

9

26

FIG 7

FIG 8

PL.3/5

0119144

0119144

PL.4/5

FIG 9

FIG 11

FIG 10

FIG 12

FIG 13

FIG 14

Office européen
des brevets

**0119144**
Numéro de la demande

**RAPPORT DE RECHERCHE EUROPEENNE**

EP  84 42 0030

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-1 535 928  (VEB) <br> * Résumé; figures 1-5 * | 1,2,7 | B 62 D    7/14 <br> B 60 K   17/34 <br> B 60 G   17/02 |
| X | FR-A-2 507 989  (DRESSER) <br> * Revendications; figure * | 1,2 | |
| X | FR-A-1 180 042  (PELLIZZETTI) <br> * Résumé; figures 1-3 * | 1,3 | |
| X | US-A-3 903 983  (YESKE) <br> * Revendications; figures 1-7 * | 1,2 | |
| X | FR-A-1 503 337  (CLARK) <br> * Résumé; figures 1-3 * | 1,2 | |
| A | US-A-3 917 307  (SHOEBRIDGE) <br> * En entier * | 3 | **DOMAINES TECHNIQUES RECHERCHES (Int. Cl. ³)** |
| A | US-A-4 230 341  (HART) <br> * En entier * | 3 | B 62 D <br> B 60 K <br> B 60 G |

Le présent rapport de recherche a été établi pour toutes les revendications

| Lieu de la recherche | Date d'achèvement de la recherche | Examinateur |
|---|---|---|
| LA HAYE | 08-06-1984 | PIRIOU J.C. |